## Europäisches Patentamt

## European Patent Office

## Office européen des brevets

(11) Veröffentlichungsnummer: **0 303 139**
**B1**

(12) **EUROPÄISCHE PATENTSCHRIFT**

(45) Veröffentlichungstag der Patentschrift:
13.06.90

(21) Anmeldenummer: 88112454.9

(22) Anmeldetag: 01.08.88

(51) Int. Cl.⁵: **E04F 13/14**, E04C 2/28,
E04C 2/26, E04F 13/08

(54) Verkleidungselement mit einer Natursteinplatte sowie Verfahren zum Herstellen eines solchen Verkleidungselements.

(30) Priorität: 14.08.87 DE 3727157

(43) Veröffentlichungstag der Anmeldung:
15.02.89 Patentblatt 89/7

(45) Bekanntmachung des Hinweises auf die Patenterteilung:
13.06.90 Patentblatt 90/24

(84) Benannte Vertragsstaaten:
AT BE CH DE ES FR GB GR IT LI LU NL SE

(56) Entgegenhaltungen:
CH-A- 609 407
DE-A- 840 581
DE-A- 2 355 803
DE-A- 2 405 621
FR-A- 855 389
GB-A- 628 325
US-A- 3 723 233

(73) Patentinhaber: Mühlberger, Ottmar, Blumenstrasse 31,
D-8458 Sulzbach-Rosenberg(DE)

(72) Erfinder: Mühlberger, Ottmar, Blumenstrasse 31,
D-8458 Sulzbach-Rosenberg(DE)

(74) Vertreter: Goetz, Rupert, Dipl.-Ing. et al, Wuesthoff &
Wuesthoff Patent- und Rechtsanwälte
Schweigerstrasse 2, D-8000 München 90(DE)

## Beschreibung

Natursteinplatten werden wegen ihrer Beständigkeit und dekorativen Wirkung als Verkleidungselemente für Außenfassaden von Bauwerken wie auch von Inneneinrichtungen hoch geschätzt. Um die Struktur des Natursteins gut zur Wirkung kommen zu lassen, ist es wünschenswert, möglichst großflächige Verkleidungselemente zu verarbeiten. Die Flächengröße von Verkleidungselementen, die ausschließlich aus Naturstein bestehen, wird aber dadurch begrenzt, daß die Plattendicke um so größer sein muß, je größer die Plattenfläche ist, denn nur dann hat die Platte eine ausreichende Eigensteifigkeit und eignet sich zur Anbringung einer statisch ausreichenden Verankerung.

Das Gewicht je Flächeneinheit von als Verkleidungselemente geeigneten Natursteinplatten steigt deshalb mit zunehmender Plattengröße überproportional. Infolgedessen werden die Verankerungselemente von mit Natursteinplatten verkleideten Fassaden statisch sehr hoch belastet. Darüber hinaus haben Verkleidungselemente aus Naturstein häufig ein so hohes Gewicht, daß für ihre Montage spezielle Kraneinrichtungen erforderlich sind.

Man hat deshalb Verkleidungselemente zur Verkleidung von Decken, Wänden, Pfeilern sowie zum Belegen von Fußböden, Treppen und dergleichen geschaffen (DE 1 954 787 A1 sowie DE 3 326 413 A1), die aus einer dünnen, nicht selbsttragenden Natursteinplatte und einer damit verklebten steifen Trägerplatte zusammengesetzt sind. Solche Verkleidungselemente sollen in der Weise hergestellt werden, daß zuerst eine Trägerplatte auf einen Natursteinblock aufgeklebt wird und von diesem dann eine Natursteinschicht in der gewünschten Dicke abgetrennt wird. Dabei treten jedoch Probleme auf, die letztlich verhindern, daß Verkleidungselemente mit großen Flächenabmessungen, beispielsweise in der Größenordnung von 1 x 2 m, mit einer Natursteinplatte von geringerer Dicke als etwa 1 cm wirtschaftlich und in zufriedenstellender Qualität hergestellt werden können.

Ein Problem ergibt sich jeweils schon beim Herrichten der Fläche des Natursteinblocks, an die eine Trägerplatte angeklebt werden soll. Handelt es sich um eine sägerauhe Fläche, dann ist eine entsprechend dicke Kleberschicht erforderlich, die erfahrungsgemäß weniger tragfähig ist als eine gleichmäßig dünne Kleberschicht. Außerdem muß damit gerechnet werden, daß in mehr oder weniger großen Bereichen eine Klebeverbindung zwischen dem sägerauhen Naturstein und der Trägerplatte überhaupt nicht zustande kommt. In diesen Bereichen ist die anschließend vom Block abgesägte Natursteinplatte besonders stoßempfindlich, so daß sie trotz Verwendung einer an sich hinreichend kräftigen Trägerplatte leicht brechen kann.

Entschließt man sich aber, den Natursteinblock an der für das Ankleben der Trägerplatte vorgesehenen Fläche zu schleifen, so ist es bei der üblichen Ausrüstung von natursteinverarbeitenden Betrieben erforderlich, den Natursteinblock so anzuordnen, daß die vorgesehene Klebefläche zum Schleifen oben liegt. Diese Lage ist zwar auch nach dem Schleifen noch zum Aufbringen der Klebstoffschicht günstig. Wenn dann aber die Trägerplatte aufgeklebt worden ist, muß der Steinblock gekippt werden, damit die Natursteinschicht, die mit der Trägerplatte verbunden bleiben soll, mit einer Blocksäge üblicher Bauart vom Steinblock abgesägt werden kann. Es ist schwierig, den Steinblock in einer solchen Säge derart auszurichten, daß der Sägeschnitt genau parallel zur Trägerplatte geführt wird. Wegen der umständlichen Handhabung des Steinblocks zwischen je zwei aufeinander folgenden Sägeschnitten ist bei jedem Sägeschnitt eine andere Parallelitätsabweichung möglich. Deshalb muß die nach dem bekannten Verfahren hergestellte Natursteinschicht mit einer reichlichen Bearbeitungszugabe versehen werden, damit Parallelitätsabweichungen anschließend durch Schleifen beseitigt werden können.

In Betrieben, die zur Verarbeitung großer Steinblöcke eingerichtet sind, herrscht insgesamt eine rauhe Betriebsweise unter anderem deshalb, weil die zur Handhabung schwerer Steinblöcke erforderlichen, entsprechend schwere Geräte im allgemeinen nicht besonders feinfühlig steuerbar sind. Auch aus diesem Grund wäre es unwirtschaftlich, nach dem bekannten Verfahren Verkleidungselemente herzustellen, bei denen die Natursteinplatte erheblich weniger als 1 cm dick ist. Mit einer Natursteinplatte solcher Dicke werden Verkleidungselemente unabhängig von der Beschaffenheit ihrer Trägerplatte als Fassadenelemente nicht oder nur dann zugelassen, wenn sie mit hindurchgehenden und somit von außen sichtbaren Befestigungsmitteln befestigt sind.

Es sind zwar auch Verkleidungselemente mit einer dünnen Außenschicht, beispielsweise aus Naturstein, und einer steifen Trägerplatte, beispielsweise aus Metall oder bewehrtem Beton bekannt (DE 1 929 713 U1), bei denen diese beiden Platten miteinander verklebt und auch in der Weise miteinander verfugt sind, daß die Trägerplatte Nuten von schwalbenschwanzförmigem Profil aufweist und an der Natursteinplatte Rippen von komplementärem Profil ausgebildet sind, die in die Nuten eingreifen. Die Herstellung von Natursteinplatten mit solchen Profilrippen ist jedoch kostspielig und die Gefahr, daß diese Rippen vor oder während dem Einfügen in die entsprechenden Profilnuten brechen, ist verhältnismäßig groß.

Der Erfindung liegt deshalb die Aufgabe zugrunde, ein Verkleidungselement mit einer dünnen, nicht selbsttragenden Natursteinplatte und einer damit verklebten steifen Trägerplatte, sowie ein Verfahren zum Herstellen eines solchen Verkleidungselements derart weiterzubilden, daß mit solchen Verkleidungselementen großflächige, nicht durch Fugen unterbrochene Verkleidungen von geringerem Gewicht je Flächeneinheit und mit geringeren Herstellungskosten als bisher realisiert werden können.

Die Aufgabe ist, soweit sie das Verkleidungselement als solches betrifft, erfindungsgemäß mit den Merkmalen des Anspruchs 1 gelöst.

Die erfindungsgemäß in der Natursteinplatte ausgebildeten Profilnuten neigen auch bei sprödem Stein weniger zum Ausbröckeln als entsprechende Profilvorsprünge. Es erscheint zwar zunächst bedenklich, die Natursteinplatte durch Nuten zu schwächen, anstatt sie durch Rippen zu verstärken. Diese Schwächung wird aber dadurch, daß die Trägerplatte in den Profilnuten verklebt ist, kompensiert oder sogar überkompensiert. Durch diese Art der Verklebung wird vor allem sichergestellt, daß die Natursteinplatte im Bereich der Profilnuten nicht stoßempfindlicher ist als in einem beliebigen, nicht durch Nuten geschwächten Bereich. Die Profilvorsprünge, die erfindungsgemäß der Trägerplatte zugeordnet sind, lassen sich aus einem nicht bruchgefährdeten Werkstoff herstellen.

Vorzugsweise ist die Trägerplatte mit der Natursteinplatte ganzflächig, also auch außerhalb der Bereiche, in denen sich Flächen der Profilnuten und Profilvorsprünge gegenüberstehen, verklebt.

Es ist ferner zweckmäßig, wenn die Profilnuten und die Profilvorsprünge, wie an sich bekannt, im Querschnitt schwalbenschwanzförmig sind. Dabei können die Schwalbenschwanzprofile so gestaltet sein, daß sie sich nur in Längsrichtung der Nuten und Vorsprünge ineinander schieben lassen. Wegen der Klebstoffschicht, die in jedem Fall zwischen Profilnut und Profilvorsprung vorgesehen ist, können die Profile aber auch so gestaltet werden, daß sie sich im rechten Winkel zur Plattenebene ineinander stecken lassen. Anschließend können die Köpfe in den Nuten verriegelt werden, indem sie beispielsweise um 90° gedreht werden. Beim Aushärten des in die Nuten eingebrachten Klebers werden die Köpfe dann in ihrer verriegelten Stellung endgültig festgehalten. Die Schrauben oder Nieten, die sich durch die Trägerplatte hindurcherstrecken, haben bei Trägerplatten, die aus mehreren Schichten aufgebaut sind, außerdem den Vorteil, daß auch diese Schichten sicher zusammengehalten werden.

Wenn Schrauben oder Nieten in der beschriebenen Weise angeordnet sind, dann können an der Rückseite der Trägerplatte Befestigungseinrichtungen mittels mindestens je einer der Schrauben oder Nieten gefestigt sein. Mit solchen Befestigungseinrichtungen lassen sich die erfindungsgemäßen Verkleidungselemente dann in an sich bekannter Weise an einer tragenden Baukonstruktion befestigen.

Die Trägerplatte kann eine an sich bekannte Aluminium-Verbundplatte mit gewelltem Kern sein.

Verkleidungselemente mit einer dünnen, nicht selbsttragenden Natursteinplatte und einer damit verklebten steifen Trägerplatte lassen sich nach dem Verfahren gemäß der Ansprüche 5 herstellen.

Aus der BE-A 840 581 ist es bekannt, einen Block aus Naturstein in Rohplatten zu zersägen, deren Dicke für die Herstellung von zwei Verkleidungselementen ausreicht. Die Rohplatten werden dann beidseitig mit je einer Trägerplatte zusammengeklebt und anschließend in einer zu den Trägerplatten parallelen Ebene geteilt.

Für die Durchführung der erfindungsgemäßen Verfahren wird vorzugsweise eine Rohplatte verwendet, deren Dicke fünf- bis zehnmal so groß ist wie die Dicke der Natursteinplatte der fertigen Verkleidungselemente. In jedem Fall ist es zweckmäßig, wenn die Klebeflächen an der Rohplatte durch Grobschleifen vorbereitet werden, wozu beispielsweise eine Schleifscheibe mit der Körnung 60 verwendet wird.

Das Anbringen von Befestigungseinrichtungen an der Rückseite der Trägerplatten gemäß Anspruch 6 kann vor oder nach dem Teilen der Rohplatte geschehen. Man hat also die Wahl, die Befestigungselemente schon zum Handhaben der aus Rohplatte und zwei Trägerplatten bestehenden Verbundplatte zu verwenden oder solche Befestigungselemente erst an einer Baustelle anzubringen, an der erfindungsgemäße Verkleidungselemente, beispielsweise an einer Fassade, befestigt werden.

Das Verkleben der Rohplatten mit den beiden Trägerplatten geschieht zweckmäßigerweise gemäß Anspruch 7. Zumindest beim Verkleben der Rohplatte mit der ersten Trägerplatte genügt das Gewicht der Rohplatte im allgemeinen, um einen ausreichenden Anpreßdruck zu erzeugen. Wenn anschließend die Rohplatte samt angeklebter erster Trägerplatte gewendet und die Rohplatte auf die zweite Trägerplatte aufgelegt wird, genügt das um das Gewicht der ersten Trägerplatte erhöhte Gewicht der Rohplatte erst recht für einen ausreichenden Anpreßdruck. Wenn aber davon abgesehen werden soll, die Rohplatte nach dem Aufkleben auf die erste Trägerplatte zu wenden, wenn also die zweite Trägerplatte einfach auf die Rohplatte aufgelegt wird, ist es im allgemeinen erforderlich, die zweite Trägerplatte zu beschweren, beispielsweise mit einer weiteren Rohplatte. Selbstverständlich kann der erforderliche Preßdruck auch mit einer Presse üblicher Bauart erzeugt werden, wobei wahlweise eine oder mehrere Verbundplatten, die aus je einer Rohplatte und zwei angeklebten Trägerplatten bestehen, gleichzeitig in die Presse eingespannt werden können.

Ausführungsbeispiele der Erfindung werden im folgenden anhand schematischer Zeichnungen näher erläutert. Es zeigen:

Fig. 1 einen Querschnitt durch ein Paar erfindungsgemäßer Verkleidungselemente während deren Herstellung,
Fig. 2 den vergrößerten Ausschnitt II in Fig. 1,
Fig. 3 einen der Fig. 2 entsprechenden Ausschnitt einer zweiten Ausführungsform der Erfindung.

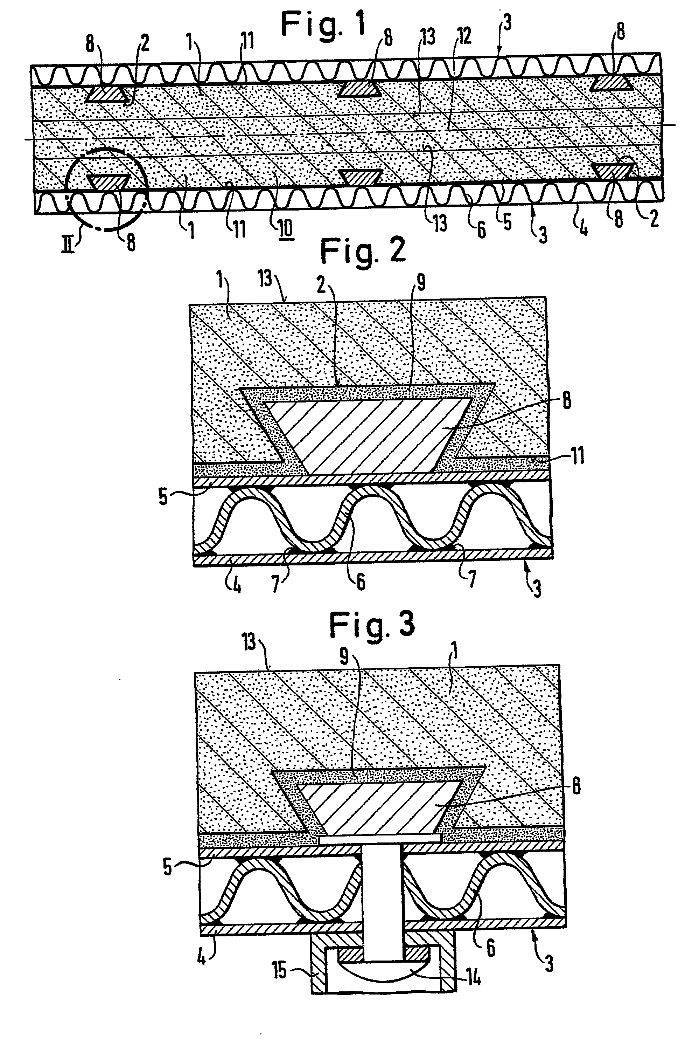

Die in Fig. 1 paarweise zusammenhängend dargestellten Verkleidungselemente haben im fertig bearbeiteten Zustand je eine Natursteinplatte 1 von sehr geringer Dicke, die beispielsweise 2 mm beträgt, grundsätzlich aber in der Größenordnung zwischen 1 mm und etwa 10 mm liegen kann. Die Natursteinplatte 1 ist mit einer Mehrzahl parallel zueinander verlaufender Profilnuten 2 versehen, die im Querschnitt schwalbenschwanz- oder trapezförmig sind. Diese Schwalbenschwanzform, die in Fig. 2 deutlicher dargestellt ist, hat Seitenwände, die in einem Winkel von etwa 60° gegen die waagerecht gezeichnete Basis zurückspringen.

Jedes der Verkleidungselemente hat eine Trägerplatte 3, die gemäß Fig. 1 und 2 eine Aluminium-Verbundplatte ist und eine ebene äußere Deckplatte 4, eine ebene innere Deckplatte 5 sowie einen zwischen den beiden Deckplatten angeordneten gewellten Kern 6 aufweist. Der Kern 6 ist mit den Deckplatten 4 und 5 durch Schweiß-, Löt- oder Klebenähte 7 verbunden.

An der Trägerplatte 3 ist eine Mehrzahl von Profilvorsprüngen 8 befestigt, beispielsweise angeklebt, angelötet oder angeschweißt. Die Profilvorsprünge 8 sind als im Querschnitt schwalbenschwanzförmige Leisten ausgebildet, die parallel zueinander verlaufen und so angeordnet sind, daß sie sich in die korrespondierenden Profilnuten 2 der zugehörigen Natursteinplatte 1 einschieben lassen. Die Profilvorsprünge 8 sind im Verhältnis zu den Profilnuten 2 so dimensioniert, daß sie zwar formschlüssig ineinander greifen, aber noch Platz für eine in die Profilnuten 2 eingebrachte Klebstoffschicht 9 von beispielsweise 0,3 mm Dicke freilassen. Die Klebstoffschicht 9 ist an den einander zugewandten Flächen der Natursteinplatte 1 und der Trägerplatte 3 vorzugsweise ganzflächig aufgebracht und besteht vorzugsweise aus einem temperaturbeständigen Kleber wie lösungsmittelfreiem, zweikomponentigem, leicht thixotropiertem Epoxidharz-Klebstoff.

Die in Fig. 1 und 2 dargestellten Verkleidungselemente werden in der Weise hergestellt, daß eine Rohplatte 10 aus Natursein von beispielsweise 20 mm Dicke zunächst geschurt wird, beispielsweise mit einer Körnung 60, so daß voneinander abgewandte, im wesentlichen ebene Klebeflächen 11 entstehen. An diese beiden Klebeflächen 11 wird je eine Trägerplatte 3 mit ihrer inneren Deckplatte 5 angeklebt. Sodann wird die Rohplatte 10 in einer mittig zwischen den beiden Trägerplatten 3 angeordneten Eben 12 durchgesägt. Anschließend werden die dadurch freigewordenen, zu den Klebeflächen 11 parallelen Natursteinoberflächen 13 geschliffen und erforderlichenfalls poliert.

Die Ausführungsform gemäß Fig. 3 unterscheidet sich von der in Fig. 1 und 2 dargestellten dadurch, daß die Profilvorsprünge 8 von Köpfen einzelner Nieten 14 gebildet sind. Die Nieten 14 sind derart in Reihen angeordnet, daß die Profilvorsprünge 8 sich in entsprechender Weise wie bei der Ausführungsform gemäß Fig. 1 und 2 in die Profilnuten 2 einschieben lassen. Die Nieten 14 erstrecken sich durch die Trägerplatte 3 hindurch und halten deren Deckplatten 4 und 5 mit dem Kern 6 fest zusammen, so daß die Tragfähigkeit der Trägerplatte 3 nicht mehr allein von der Festigkeit der Löt- oder Klebe- oder Schweißnähte 7 abhängt. Die Nieten 14 sind, wie in Fig. 3 dargestellt, zusätzlich dazu benutzt, Befestigungseinrichtungen 15 an der von der Natursteinplatte 1 abgewandten Drehplatte 4 der Trägerplatte 3 zu befestigen.

## Patentansprüche

1. Verkleidungselement mit einer dünnen, nicht selbsttragenden Natursteinplatte (1) und einer damit verklebten, steifen Trägerplatte (3), dadurch gekennzeichnet, daß
   - die Natursteinplatte (1) mit Profilnuten (2) versehen ist, die sich, bezogen auf die Montageposition des Verkleidungselements, zumindest abschnittsweise horizontal erstrecken,
   - in die Profilnuten (2) korrespondierende Profilvorsprünge (8) der Trägerplatte (3) formschlüssig eingreifen,
   - die Profilvorsprünge (8) Köpfe von Schrauben oder Nieten (14) sind, die sich durch die Trägerplatte (3) hindurcherstrecken, und
   - die Trägerplatte (3) mit der Natursteinplatte (1) mindestens in den Profilnuten (2) verklebt ist.

2. Verkleidungselement nach Anspruch 1, dadurch gekennzeichnet, daß die Profilnuten (3) und die Profilvorsprünge (8) im Querschnitt schwalbenschwanzförmig sind.

3. Verkleidungselement nach Anspruch 1 oder 2, dadurch gekennzeichnet, daß an der Rückseite der Trägerplatte (3) Befestigungseinrichtungen (15) mittels mindestens je einer der Schrauben oder Nieten (14) befestigt sind.

4. Verkleidungselement nach einem der Ansprüche 1 bis 3, dadurch gekennzeichnet, daß die Trägerplatte (3) eine Aluminium-Verbundplatte mit gewelltem Kern (6) ist.

5. Verfahren zum Herstellen von Verkleidungselementen mit einer dünnen, nicht selbsttragenden Natursteinplatte (1) und einer damit verklebten steifen Trägerplatte (3), wobei eine aus Naturstein bestehende Rohplatte (10) zweiseitig mit je einer Trägerplatte (3) zusammengeklebt und anschließend in einer zu den Trägerplatten (3) parallelen Ebene (12) geteilt wird, dadurch gekennzeichnet, daß
   - in die Rohplatte (10) Profilnuten (2) eingearbeitet werden,
   - die Profilnuten (2) wenigstens teilweise mit einer Klebstoffschicht (9) ausgefüllt werden,
   - durch die Trägerplatte (3) Schrauben oder Nieten (14) in Reihen, die der Anordnung der Profilnuten (2) entsprechen, hindurchgesteckt werden, und
   - die Köpfe der Schrauben oder Nieten (14) als Profilvorsprünge (8) in die Profilnuten (2) eingebracht und in die Klebstoffschicht (9) eingebettet werden.

6. Verfahren nach Anspruch 5, dadurch gekennzeichnet, daß mit wenigstens einigen der Schrauben oder Nieten (14) Befestigungseinrichtungen (15) an der Rückseite der Trägerplatten (3) befestigt werden.

7. Verfahren nach einem der Ansprüche 5 oder 6, dadurch gekennzeichnet, daß
   - eine der Trägerplatten (3) liegend angeordnet und an ihrer Oberseite mit einer Klebstoffschicht (9) versehen wird,
   - dann die Rohplatte (10) auf diese Trägerplatte (3) aufgelegt wird, und – entsprechende Schritte mit der anderen Trägerplatte (3) ausgeführt werden.

## Claims

1. Facade element comprising a thin non-self-supporting natural stone plate (1) and a stiff support plate (3) bonded thereto, characterized in that

– the natural stone plate (1) is provided with profile grooves (2) which with respect to the assembly position of the facade element extend at least sectionwise horizontally,
– into the profile grooves (2) corresponding profile projections (8) of the support plate (3) engage in formlocking manner,
– the profile projections (8) are heads of screws or rivets (14) which extend through the support plate (3) and
– the support plate (3) is adhesively bonded to the natural stone plate (1) at least in the profile grooves (2).

2. Facade element according to claim 1, characterized in that the profile grooves (3) and the profile projections (8) are dovetail-shaped in cross-section.

3. Facade element according to claim 1 or 2, characterized in that at the rear side of the support plate (3) securing means (15) are secured by means in each case of at least one of the screws or rivets (14).

4. Facade element according to any one of claims 1 to 3, characterized in that the support plate (3) is an aluminium composite plate with corrugated core (6).

5. Method for manufacturing facade elements having a thin non-self-supporting natural stone (1) and a stiff support plate (3) bonded thereto, a raw plate (10) consisting of natural stone being bonded adhesively on both sides to a respective support plate (3) and thereafter divided in a plane (12) parallel to the support plates (3), characterized in that
– profile grooves (2) are worked into the raw plate (10),
– the profile grooves (2) are at least partially filled with an adhesive layer (9),
– screws or rivets (14) are inserted through the support plate (3) in rows corresponding to the arrangement of the profile grooves (2) and
– the heads of the screws or grooves (14) are introduced as profile projections (8) into the profile grooves (2) and embedded in the adhesive layer (9).

6. Method according to claim 5, characterized in that with at least some of the screws or rivets (14) securing means (15) are secured to the rear side of the support plates (3).

7. Method according to claim 5 or 6, characterized in that
– one of the support plates (3) is arranged lying down and provided at its upper side with an adhesive layer (9),
– that the raw plate (10) is then placed onto said support plate (3) and
– corresponding steps are carried out with the other support plate (3).

**Revendications**

1. Elément de revêtement comportant une plaque de pierre naturelle (1), mince et non autoportante, et une plaque de support (3), rigide et collée sur elle, caractérisé en ce que:

– la plaque de pierre naturelle (1) est pourvue de rainures profilées (2) qui s'étendent, en relation avec la position de montage de l'élément de revêtement, au moins en partie horizontalement,
– des saillies profilées correspondantes (8) de la plaque de support (3) s'accrochent avec conjugaison de formes dans les rainures profilées (2),
– les saillies profilées (8) sont constituées par des têtes de vis ou de rivets (14), qui traversent la plaque de support (3), et
– la plaque de support (3) est collée avec la plaque de pierre naturelle (1) au moins dans les rainures profilées (2).

2. Elément de revêtement selon la revendication 1, caractérisé en ce que les rainures profilées (3) et les saillies profilées (8) ont une section en forme de queue d'aronde.

3. Elément de revêtement selon une des revendications 1 ou 2, caractérisé en ce que sur le côté arrière de la plaque de support (3) sont fixés des dispositifs de fixation (15) à l'aide d'au moins respectivement une des vis ou rivets (14).

4. Elément de revêtement selon une des revendications 1 à 3, caractérisé en ce que la plaque de support (3) est une plaque composite d'aluminium à âme ondulée (6).

5. Procédé de fabrication d'éléments de revêtement comportant une plaque de pierre naturelle (1), mince et non autoportante, ainsi qu'une plaque de support (3), rigide et collée avec elle, une plaque brute (10) formée de pierre naturelle étant liée sur ses deux côtés à une plaque de support (3) par collage et étant ensuite divisée dans un plan (12) parallèle aux plaques de support (3), caractérisé en ce que:
– des rainures profilées (2) sont usinées dans la plaque brute (10),
– les rainures profilées (2) sont remplies au moins en partie d'une couche d'adhésif (9),
– la plaque de support (3) est traversée par des vis ou rivets (14) disposés en rangées qui correspondent à la dispositions des rainures profilées (2), et
– les têtes des vis ou rivets (14) sont engagées comme saillies profilées (8) dans les rainures profilées (2) et sont noyées dans la couche d'adhésif (9).

6. Procédé selon la revendication 5, caractérisé en ce que des dispositifs de fixation (15) sont fixés sur le côté arrière des plaques de support (3) à l'aide d'au moins certains des rivets ou vis (14).

7. Procédé selon une des revendications 5 ou 6, caractérisé en ce que:
– une des plaques de support (3) est disposée à plat et est pourvue d'une couche d'adhésif (9) sur son côté supérieur,
– ensuite la plaque brute (10) est mise en place sur cette plaque de support (3), et
– les étapes correspondantes sont effectuées avec l'autre plaque de support (3).

# Fig. 1

# Fig. 2

# Fig. 3